# FASCICULE DE BREVET EUROPEEN

(11) **EP 0 834 418 B1**
(45) Date de publication et mention de la délivrance du brevet: **12.03.2003**
(21) Numéro de dépôt: 97402318.6
(22) Date de dépôt: 02.10.1997
(51) Int. Cl.: B60N 2/02

(54) **Motoréducteur de réglage en position d'éléments d'un siège de véhicule automobile**
Motorgetriebeeinheit zum Verstellen der Position von Kraftfahrzeugsitzelementen
Reduction gear for adjusting the position of automotive vehicle seat elements

(30) Priorité: 04.10.1996 FR 9612143
(43) Date de publication de la demande: 08.04.1998
(73) Titulaire: FAURECIA SIEGES D'AUTOMOBILES S.A., 92100 Boulogne (FR)
(72) Inventeur: Bak, Philippe, 25700 Valentigney (FR); Laporte, Pierre, 45290 Nogent sur Vernisson (FR)
(74) Mandataire: Burbaud, Eric

(56) Documents cités:
- DE-A- 3 836 019
- US-A- 4 267 494
- US-A- 4 276 640
- US-A- 4 698 571
- US-A- 4 808 897
- US-A- 4 809 180
- US-A- 5 140 235
- US-A- 5 406 270

## Description

La présente invention concerne un système de commande du fonctionnement de modules à motoréducteur à double sens de rotation, de réglage en position d'éléments d'un siège de véhicule automobile.

De tels sièges dont les éléments peuvent être réglés en position par l'intermédiaire de motoréducteurs électriques, sont bien connus dans l'état de la technique et sont généralement appelés sièges à réglages motorisés.

D'une façon générale, chaque élément du siège est relié par exemple par l'intermédiaire de moyens de conversion de mouvement à un motoréducteur, disposé par exemple sous l'assise du siège et dont le fonctionnement, c'est-à-dire l'alimentation, est piloté par des moyens de commande manipulables par un utilisateur, pour régler la position de cet élément du siège à la morphologie de cet utilisateur.

Des moyens de mémorisation de positions préétablies des éléments de ce siège, peuvent également être associés aux moyens de commande, pour permettre une adaptation rapide de ce siège à la morphologie de différents utilisateurs successifs.

D'une façon générale, chaque motoréducteur est associé à ses propres moyens de commande comprenant des moyens d'inversion de tension d'alimentation pilotables par l'utilisateur par exemple, pour permettre le fonctionnement de celui-ci dans un sens ou dans l'autre, afin de régler dans une direction ou l'autre, la position de l'élément correspondant du siège.

On conçoit que cette structure présente un certain nombre d'inconvénients notamment en raison du nombre important de motoréducteurs intégrés dans un siège, ce qui nécessite un nombre important de fils pour assurer le fonctionnement de ceux-ci et limite les possibilités d'adaptation de ceux-ci à de nouvelles évolutions ou conceptions de sièges.

Un système de commande tel que décrit par le préambule de la revendication 1 est aussi connu du document US-4,276,640.

Le but de l'invention est donc de résoudre ces problèmes en proposant un système de commande du fonctionnement de modules à motoréducteur qui soit simple, fiable, qui n'utilise qu'un nombre limité de fils et qui puisse être adapté facilement à différentes structures de sièges.

A cet effet, l'invention a pour objet un système de commande du fonctionnement de modules à motoréducteur à double sens'de rotation, de réglage en position d'éléments d'un siège de véhicule automobile, caractérisé en ce que les modules à motoréducteur sont raccordés en parallèle à des moyens d'alimentation communs, dont le sens de la tension de sortie est piloté par un module de commande et à ce module de commande par un réseau multiplexé de transmission d'informations de pilotage de ceux-ci, pour permettre l'activation ou non, dans un sens de rotation ou l'autre, de chaque module à motoréducteur, afin de régler chaque élément de siège en position.

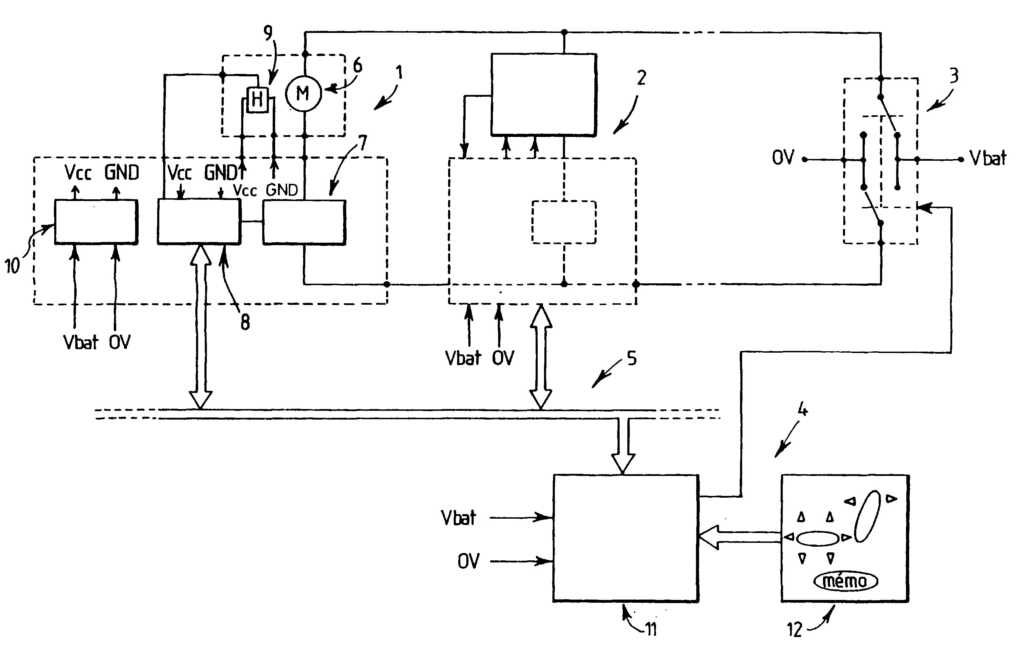

L'invention sera mieux comprise à la lecture de la description qui va suivre, donnée uniquement à titre d'exemple et faite en se référant au dessin annexé, qui représente un schéma synoptique illustrant la structure générale d'un exemple de réalisation d'un système de commande selon l'invention.

Ainsi qu'on l'a indiqué précédemment, l'invention concerne un système de commande du fonctionnement de modules à motoréducteur à double sens de rotation, de réglage en position d'éléments d'un siège de véhicule automobile.

L'implantation de tels modules à motoréducteur dans ou sous un siège étant bien connue dans l'état de la technique, on ne la décrira pas plus en détail par la suite.

On notera simplement que ces motoréducteurs sont reliés à des mécanismes de déplacement des éléments du siège pour permettre leur réglage en position.

Sur la figure, on a représenté un système de commande qui comporte deux modules à motoréducteur à double sens de rotation, mais il va de soi bien entendu qu'un nombre différent de modules peut être envisagé.

Ces modules à motoréducteur sont désignés par les références générales 1 et 2 sur cette figure.

La structure de ces modules sera décrite plus en détail par la suite.

On notera que ces différents modules à motoréducteur sont raccordés en parallèle à des moyens d'alimentation communs, désignés par la référence générale 3 sur cette figure, dont le sens ou polarité de la tension de sortie est piloté par un module de commande désigné par la référence générale 4 sur cette figure.

Les moyens d'alimentation 3 sont reliés à la source d'énergie du véhicule constituée par la batterie de celui-ci par exemple.

Ces modules de motoréducteur sont également raccordés au module de commande 4 par l'intermédiaire d'un réseau multiplexé de transmission d'informations de pilotage de ceux-ci, ce réseau multiplexé de transmission étant désigné par la référence générale 5 sur cette figure.

On conçoit alors que le module de commande 4 permet d'une part, de commander le sens de la tension de sortie des moyens d'alimentation communs 3 des modules à motoréducteur et d'autre part, de transmettre sur le réseau multiplexé 5 des informations de pilotage de ceux-ci, pour permettre l'activation ou non, dans un sens de rotation ou l'autre, de chaque module à motoréducteur afin de régler chaque élément de siège en position.

Les réseaux multiplexés de transmission d'informations sont bien connus dans l'état de la technique, de sorte que l'on ne les décrira pas en détail par la suite.

On pourra par exemple citer des réseaux de type VAN, CAN ou I2C.

Ces réseaux permettent de transmettre par exemple sur un bus de transmission d'informations comprenant deux fils de données et de données complémentaires, différentes informations entre les différentes stations raccordées à ce réseau et auxquelles sont affectées des adresses de façon classique.

La structure particulière du module de commande 4 sera décrite plus en détail par la suite.

Comme on peut le voir sur cette figure, chaque module à motoréducteur à double sens de rotation, tel que par exemple le module désigné par la référence générale 1 sur cette figure, comporte un motoréducteur à double sens de rotation, désigné par la référence générale 6, présentant une structure classique et relié à un élément du siège.

L'une des bornes d'alimentation de ce moteur est par exemple reliée à l'une des bornes de sortie des moyens d'alimentation communs désignés par la référence générale 3.

L'autre borne d'alimentation de ce moteur est reliée à un organe formant relais d'alimentation de celui-ci désigné par la référence générale 7 sur cette figure, lui-même relié à l'autre borne des moyens d'alimentation communs 3 décrits précédemment.

On notera que cet organe formant relais peut par exemple comporter un relais électromécanique ou encore un organe commutateur à semi-conducteur tel que par exemple un triac.

Le fonctionnement de cet organe formant relais d'alimentation 7 permettant d'alimenter ou non le motoréducteur 6, est piloté par des moyens de commande 8 de ce module à motoréducteur 1, ces moyens de commande 8 étant raccordés au réseau multiplexé de transmission d'informations 5.

Ces moyens de commande 8 comprennent par exemple toute unité de traitement de données appropriée comprenant une interface de bus et permettant d'assurer un échange d'informations entre le module à motoréducteur 1 et le module de commande 4, à travers le réseau multiplexé 5, pour assurer la commande de l'organe formant relais d'alimentation du motoréducteur correspondant.

Ces moyens de commande 8 sont également raccordés par exemple à un capteur de position de l'élément correspondant du siège.

Dans l'exemple de réalisation représenté sur cette figure, ce capteur de position est associé au motoréducteur, et est désigné par la référence générale 9 sur cette figure.

Ce capteur de position peut par exemple être un capteur à effet Hall.

Bien entendu, d'autres modes de réalisation de ce capteur peuvent être envisagés.

De façon classique, l'alimentation de ce module 1 est assurée par des moyens désignés par la référence générale 10 sur cette figure, raccordés à la source d'énergie du véhicule et délivrant une tension régulée Vcc.

Dans l'exemple de réalisation représenté, où le capteur de position est un capteur à effet Hall, celui-ci est également alimenté par ces moyens.

La structure du module à motoréducteur 2 est similaire à celle du module à motoréducteur 1 qui vient d'être décrit et l'on conçoit que ces modules à motoréducteur sont donc raccordés en parallèle aux moyens d'alimentation communs 3 et au module de commande 4 par le réseau multiplexé de transmission d'informations 5.

Les moyens d'alimentation communs 3, dont le sens de la tension de sortie est piloté par le module de commande 4, peuvent également présenter n'importe quelle structure appropriée, par exemple à relais inverseurs ou à organes commutateurs à semi-conducteur.

Le fonctionnement de ces moyens d'alimentation est piloté, comme cela a été indiqué précédemment, par le module de commande 4, pour assurer une commande du sens de la tension de sortie de ceux-ci et donc du sens de la tension d'alimentation des modules à motoréducteur, pour permettre aux motoréducteurs correspondants de tourner dans un sens ou dans l'autre, afin de permettre un réglage dans une direction ou l'autre de chaque élément de siège associé à chaque module à motoréducteur.

Le module de commande 4 peut présenter quant à lui différentes structures appropriées.

Dans l'exemple de réalisation représenté, celui-ci comporte une unité de traitement d'informations, par exemple à micro-contrôleur, désignée par la référence générale 11 sur cette figure, raccordée au réseau multiplexé 5 et associée à une interface utilisateur désignée par la référence générale 12.

Cette interface comporte par exemple des organes de commande de la position des éléments du siège, manipulables par un utilisateur et constitués par exemple par des boutons-poussoirs, mais également des moyens de mémorisation d'au moins une position pré-établie des éléments du siège.

Une telle structure d'interface est déjà connue dans l'état de la technique et permet par exemple à un utilisateur de manipuler des boutons-poussoirs de commande en position des éléments du siège ou d'activer des moyens de mémorisation dans lesquels cet utilisateur a stocké au préalable des positions des éléments du siège qui correspondent à sa morphologie.

On conçoit alors que d'une façon générale, le module de commande 4 est relié par l'intermédiaire d'un réseau multiplexé de transmission d'informations 5 aux différents modules à motoréducteur 1,2 associés aux éléments du siège, pour leur transmettre des informations d'activation ou non, tandis que l'alimentation des motoréducteurs est assurée par l'intermédiaire d'un inverseur de tension commun à tous ces motoréducteurs, dont le fonctionnement est piloté par le module de commande 4 pour obtenir, à la suite de l'actionnement d'un organe de commande par exemple par un utilisateur, une activation sélective de l'un des modules à motoréducteur et ce dans un sens de rotation déterminé, afin de permettre un réglage dans la direction souhaitée de la position de l'élément correspondant du siège.

On conçoit alors que cette structure présente un certain nombre d'avantages, notamment au niveau du nombre réduit de fils nécessaires pour assurer le raccordement de ces différents modules et moyens.

De plus, les différents modules à motoréducteur, bien que raccordés en parallèle par exemple aux moyens d'alimentation 3, peuvent se présenter sous la forme de modules raccordables les uns aux autres, par l'intermédiaire par exemple de connecteurs appropriés, ce qui permet d'adapter très facilement la structure du système de commande à la structure du siège, notamment en ajoutant ou en retirant des modules.

On assiste également depuis quelque temps, à un développement important de l'intégration des réseaux multiplexés de transmission d'informations à bord des véhicules automobiles et le système de commande selon l'invention, en utilisant un réseau multiplexé compatible avec celui du reste du véhicule, facilite son intégration et la gestion de son fonctionnement.

Enfin, l'utilisation d'un réseau multiplexé de transmission d'informations entre le module de commande et les modules à motoréducteur permet de réaliser des fonctions nouvelles telles que par exemple la surveillance du fonctionnement des motoréducteurs et par exemple le contrôle de leur bon fonctionnement, afin de fiabiliser cette fonction, par exemple en empêchant toute propagation de panne aux organes environnants.

## Revendications

1. Système de commande du fonctionnement de modules à motoréducteur à double sens de rotation, de réglage en position d'éléments d'un siège de véhicule automobile **caractérisé en ce que** les modules à motoréducteur (1,2) sont raccordés en parallèle à des moyens d'alimentation communs (3) dont le sens de la tension de sortie est piloté par un module de commande (4) pour inverser ou non le sens de rotation des modules à motoréducteur (1,2), et **en ce que** ledit module de commande (4) est, en outre, raccordé auxdits modules à motoréducteur (1,2) par un réseau multiplexé (5) de transmission d'informations de pilotage, pour permettre l'activation ou non de chaque module à motoréducteur (1,2), afin de régler chaque élément de siège en position.

2. Système selon la revendication 1, **caractérisé en ce que** chaque module (1,2) à motoréducteur à double sens de rotation comporte un motoréducteur (6) associé à un organe (7) formant relais d'alimentation de celui-ci, dont le fonctionnement est piloté par des moyens de commande (8) raccordés au réseau multiplexé (5).

3. Système selon la revendication 2, **caractérisé en ce que** les moyens de commande (8) sont raccordés à un capteur (9) de position de l'élément correspondant du siège.

4. Système selon la revendication 3, **caractérisé en ce que** le capteur de position (9) est associé au motoréducteur correspondant (6).

5. Système selon la revendication 3 ou 4, **caractérisé en ce que** le capteur est un capteur à effet Hall.

6. Système selon l'une quelconque des revendications 2 à 5, **caractérisé en ce que** l'organe formant relais d'alimentation (7) du motoréducteur (6) comporte un triac.

7. Système selon l'une quelconque des revendications 2 à 5, **caractérisé en ce que** l'organe formant relais d'alimentation (7) du motoréducteur (6) comporte un relais électromécanique.

8. Système selon l'une quelconque des revendications précédentes, **caractérisé en ce que** les moyens d'alimentation communs (3) comportent un inverseur de tension raccordé à une source d'énergie du véhicule.

9. Système selon l'une quelconque des revendications précédentes, **caractérisé en ce que** le module de commande (4) comporte une unité de traitement d'informations (11) raccordée au réseau multiplexé (5) et à une interface utilisateur (12) munie d'organes de commande de position des éléments du siège, manipulables par un utilisateur.

10. Système selon la revendication 9, **caractérisé en ce que** le module de commande (4) comporte des moyens de mémorisation d'au moins une position pré-établie des éléments du siège.

11. Système selon l'une quelconque des revendications 9 et 10, **caractérisé en ce que** l'unité de traitement d'informations (11) comporte un micro-contrôleur.

12. Système selon l'une quelconque des revendications précédentes, **caractérisé en ce que** le réseau multiplexé (5) est choisi dans le groupe comprenant les réseaux CAN, VAN et 12C.

## Claims

1. System for controlling the operation of reversible motor-speed reducer modules for adjusting in position elements of a motor vehicle seat structure, **characterized in that** the motor-speed reducer modules (1,2) are connected in parallel to common supply means (3)in respect of which the direction of the output voltage is piloted by a control module (4) for reversing or not the direction of rotation of the motor-speed reducer modules (1,2) **in that** said control module (4) further is connected to said motor-speed reducer modules (1,2) by a piloting data transmission multiplexed network (5) in order to permit the actuation or the non-actuation of each motor-speed reducer module (1,2) , for adjusting each element of the seat structure in position.

2. System according to claim 1, **characterized in that** each reversible motor-speed reducer module (1,2) comprises a motor-speed reducer (6) associated with means(7) forming a supply relay for the motor-speed reducer the operation of which is piloted by control means (8) connected to the multiplexed network (5).

3. System according to claim 2, wherein the control means (8) are connected to a position sensor (9) detecting the position of the corresponding element of the seat structure.

4. System according to claim 3, wherein the position sensor (9) is associated with the corresponding motor-speed reducer (6).

5. System according to claim 3 or 4, wherein the sensor (9) is a Hall effect sensor.

6. System according to anyone of the claims 2 to 5, wherein the means forming a supply relay (7) for the motor-speed reducer (6) comprise a triac.

7. System according to anyone of the claims 2 to 5, wherein the means forming a supply relay (7) for the motor-speed reducer (6) comprise an electromechanical relay.

8. System according to anyone of the preceding claims, wherein the common supply means (3) comprises a voltage inverter connected to a power supply to the vehicle.

9. System according to anyone of the preceding claims , wherein the control module (4) comprising a data processing unit (11) connected to the multiplexed network (5) and to a user interface (12) provided with means for controlling the position of the elements of the seat structure which may be manipulated by a user.

10. System according to claim 9, wherein the control module (4) comprises means for storing at least one preestablished position of the elements of the seat structure.

11. System according to claim 9 or 10, wherein the data processing unit (11) comprises a micro-controller.

12. System according to anyone of the preceding claims, wherein the multiplexed network (5) is selected from the group comprising CAN, VAN and I2C networks.

## Patentansprüche

1. System zum Steuern Von Modulen mit Motorgetriebe mit zweifacher Drehrichtung zum Einstellen der Position von Elementen eines Kraftfahrzeugsitzes, **dadurch gekennzeichnet, dass** die Module mit Motorgetriebe (1, 2) parallel mit einer gemeinsamen Versorgungseinrichtung (3) verbunden sind, wobei die Richtung der Ausgangsspannung von einem Steuermodul (4) gesteuert wird, um die Drehrichtung der Module mit Motorgetriebe (1, 2) umzukehren oder nicht, und dadurch, dass das Steuermodul (4) darüber hinaus Über ein Multiplex-Netz (5) zur Übertragung von Steuerinformationen mit den Modulen mit Motorgetriebe (1, 2) verbunden ist, wodurch das Aktivieren oder Nicht-Aktivieren jedes Moduls mit Motorgetriebe (1, 2) zum Einstellen der Position jedes Sitzelements ermöglicht wird.

2. System nach Anspruch 1, **dadurch gekennzeichnet, dass** jedes Modul (1, 2) mit Motorgetriebe mit zweifacher Drehrichtung ein Motorgetriebe (6) aufweist, das einem Organ (7) zugeordnet ist, welches ein Versorgungsrelais von diesem bildet, das von einer mit dem Multiplex-Netz (5) verbundenen Steuereinrichtung (8) gesteuert wird.

3. System nach Anspruch 2, **dadurch gekennzeichnet, dass** die Steuereinrichtung (8) mit einem Lagesensor (9) des entsprechenden Sitzelements verbunden ist.

4. System nach Anspruch 3, **dadurch gekennzeichnet, dass** der Lagesensor (9) dem entsprechenden Motorgetriebe (6) zugeordnet ist.

5. System nach Anspruch 3 oder 4, **dadurch gekennzeichnet, dass** der Sensor ein Hall-Effekt-Sensor ist.

6. System nach einem der Ansprüche 2 bis 5, **dadurch gekennzeichnet, dass** das Organ, welches das Versorgungsrelais (7) des Motorgetriebes (6) bildet, ein Triac aufweist.

7. System nach einem der Ansprüche 2 bis 5, **dadurch gekennzeichnet, dass** das Organ, welches das Versorgungsrelais (7) des Motorgetriebes (6) bildet, cm elektromechanisches Relais aufweist.

8. System nach einem der vorhergehenden Ansprüche, **dadurch gekennzeichnet, dass** die gemeinsame Versorgungseinrichtung (3) einen Spannungsinverter aufweist, der mit einer Energiequelle des Fahrzeugs verbunden ist.

9. System nach einem der vorhergehenden Ansprüche, **dadurch gekennzeichnet, dass** das Steuermodul (4) eine Informationsverarbeitungseinheit (11) aufweist, die mit dem Multiplex-Netz (5) und einer Benutzerschnittstelle (12) verbunden ist, welche mit Organen zur Steuerung der Position der Sitzelemente versehen ist, die von einem Benutzer betätigt werden können.

10. System nach Anspruch 9, **dadurch gekennzeichnet, dass** das Steuermodul (4) Mittel zum Speichern von mindestens einer voreingestellten Position der Sitzelemente umfasst.

11. System nach einem der Ansprüche 9 und 10, **dadurch gekennzeichnet, dass** die Informationsverarbeitungseinheit (11) einen Mikrocontroller aufweist.

12. System nach einem der vorhergehenden Ansprüche, **dadurch gekennzeichnet, dass** das Multiplex-Netz (5) aus der Gruppe der CAN-, VAN- und 12C-Busse gewählt ist.
